# EUROPÄISCHE PATENTSCHRIFT

(11) **EP 0 816 191 B1**
(45) Veröffentlichungstag und Bekanntmachung des Hinweises auf die Patenterteilung: **02.01.2002**
(21) Anmeldenummer: 97110189.4
(22) Anmeldetag: 21.06.1997
(51) Int. Cl.: B60R 25/02

(54) **Vorrichtung mit einem Wahlhebel für Kraftfahrzeug-Automatikgetriebe**
Device with gear selector lever for an automobile automatic gearbox
Dispositif avec sélecteur de vitesse pour boîte de vitesse automatique pour véhicule

(30) Priorität: 28.06.1996 DE 19626013
(43) Veröffentlichungstag der Anmeldung: 07.01.1998
(73) Patentinhaber: VALEO GmbH & Co Schliesssysteme KG, 42579 Heiligenhaus (DE)
(72) Erfinder: Schwab, Dittmar, 63110 Rodgau (DE)
(74) Vertreter: Podszus, Burghart, Dipl.-Phys., Dipl.-Wirtsch.-Ing.

(56) Entgegenhaltungen:
- EP-A- 0 315 174
- EP-A- 0 580 970
- DE-A- 4 120 380
- PATENT ABSTRACTS OF JAPAN vol. 016, no. 585 (M-1347), 25. Dezember 1992 (1992-12-25) & JP 04 232145 A (MAZDA MOTOR CORP), 20. August 1992 (1992-08-20)

## Beschreibung

Die Erfindung betrifft eine Vorrichtung mit einem um eine Drehachse schwenkbaren und an einem Wählhebelgehäuse angeordneten Wählhebel für Kraftfahrzeug-Automatikgetriebe.

Aus der gattungsgemäßen EP 0 580 970 A1 ist eine Vorrichtung mit einem um eine Drehachse schwenkbar angeordneten Wählhebel für Kraftfahrzeug-Automatikgetriebe bekannt, bei der zur Verriegelung des Wählhebels ein mit einem Schließzylinder verbundener Sperrhebel vorgesehen ist, der am Wählhebelgehäuse relativ zur Schwenkachse des Wählhebels schwenkbar angeordnet ist. Der Wählhebel weist eine Kulissenführung in Form eines an ihm fest angebrachten Kreissegments auf, an der sich ein an dem Sperrhebel befestigter Mitnehmer abstützt, der in der Verriegelungsstellung des Wählhebels durch entsprechende Betätigung des Schließzylinders in eine Ausnehmung der Kulissenführung eingreift.

Bei dieser bekannten Vorrichtung ist u.a. für das Wählhebelgehäuse relativ viel Platz im Innenraum des jeweiligen Fahrzeuges erforderlich, weil die an dem Wählhebelgehäuse angeordnete Kulissenführung, die die einzelnen Stellungen des Wählhebels definiert, oberhalb der Drehachse des Wählhebels angeordnet ist und einen bestimmten Mindestabstand von der Drehachse benötigt. Besonders bei kleineren Fahrzeugen mit Automatikgetriebe haben sich derartige bekannte Vorrichtungen daher als nachteilig erwiesen.

Aus der DE 42 06 250 A1 ist eine Sicherheitsvorrichtung für ein Kraftfahrzeug, das u.a. mit einem einen Wählhebel enthaltenden Getriebe ausgerüstet ist, bekannt. Der Wählhebel ist in Abhängigkeit von entsprechender Betätigung des Schloßzylinders mittels einer Schwenkbewegung ausführenden Sperrklinke blockierbar, die sich bei außerhalb der Schlüsselabzugsstellung befindlichem Schloßzylinder mit einer Anschlagfläche auf einer Stützklinke abstützt.

Aus der DE 41 20 380 C2 ist eine Verriegelungsvorrichtung zwischen einem Zündschloß und dem in einem Gehäuse gelagerten Wählhebel eines automatischen Kraftfahrzeuggetriebes bekannt. Der Wählhebel ist als Umlenkhebel ausgebildet, zu dessen Verriegelung ist ein mit einem Schließzylinder verbundener Sperrbolzen vorgesehen.

Der Erfindung liegt die Aufgabe zugrunde, eine Vorrichtung der eingangs erwähnten Art anzugeben, bei der das in den Fahrzeuginnenraum hineinragende Wählhebelgehäuse möglichst klein gehalten werden kann und die trotzdem einen sicheren Diebstahlschutz gewährleistet, einfach und robust aufgebaut ist und zuverlässig arbeitet.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, den Sperrbolzen unterhalb der Drehachse des Wählhebels anzuordnen. Zur Verriegelung des Wählhebels greift der Sperrbolzen dann in eine nutenförmige Ausnehmung eines ebenfalls unterhalb der Drehachse angeordneten schwenkbaren Sperrhebels ein, der durch den Sperrbolzen fixiert wird und über einen Mitnehmer auch den Wählhebel in seiner Verriegelungsstellung fixiert. Hierzu ist der Wählhebel als Umlenkhebel ausgebildet, so daß der Mitnehmer des Sperrhebels in den unterhalb der Drehachse befindlichen (zweiten) Teilhebel eingreift.

Es hat sich als besonders vorteilhaft erwiesen, an dem Ende des zweiten Teilhebels einen federbeaufschlagten Steuernocken anzuordnen, welcher in Vertiefungen einer an dem Wählhebelgehäuse angeordneten Kulissenführung eingreift, die die einzelnen Stellungen des Wählhebels definieren. Dadurch wird erreicht, daß die Kulissenführung im Bodenbereich des Fahrzeuges angeordnet ist und der Teil des Wählhebelgehäuses, der in den Fahrzeuginnenraum reicht, eine wesentlich geringere Höhe aufweisen kann als bekannte Wählhebelgehäuse.

Um auf einfache Weise zusätzlich zu der Fixierung des Wählhebels in der Verriegelungsstellung auch eine Wegfahrsperre anzusteuern, die direkt in das Motorgetriebe des entsprechenden Fahrzeuges eingreift, wird bei einer vorteilhaften weiteren Ausbildung der Erfindung vorgeschlagen, an dem zweiten Teilhebel einen Mitnehmer anzuordnen, der beim Verschwenken des Wählhebels in die Verriegelungsstellung in eine Ausnehmung des ersten Endes eines zweiten Umlenkhebels eingreift, dessen zweites Ende mit einem Bowdenzug oder einem Gestänge verbunden ist, derart, daß bei der Betätigung des Wählhebels die Wegfahrsperre in das Motorgetriebe eingreift.

Bei einem weiteren Ausführungsbeispiel ist der Wählhebel in seiner Verriegelungsstellung mittels einer in Richtung seiner Längsachse verschiebbaren Sperrstange arretierbar. Statt des üblicherweise hierzu vorgesehenen, relativ aufwendigen Griffes zum Ziehen der Sperrstange ist ein knopfartiges Betätigungselement (Auslöseknopf) vorgesehen. An der dem Auslöseknopf abgewandten (zweiten) Seite der Sperrstange ist seitlich ein Steuernocken angeordnet, der in der Verriegelungsstellung des Wählhebels durch eine Feder in eine entsprechende Rastöffnung des Wählhebelgehäuses gedrückt wird. Zum Verschwenken des Wählhebels muß nach Betätigung eines entsprechenden Zündschlüssels die Sperrstange dann zunächst gegen den Druck der Feder nach unten gedrückt werden, bis der Steuernocken aus der Rastöffnung herausgedrückt ist.

Weitere Einzelheiten und Vorteile der Erfindung ergeben sich aus dem folgenden anhand von Figuren erläuterten Ausführungsbeispiel. Es zeigen:
- Fig. 1: schematisch die Seitenansicht eines die Wählhebelmechanik und das Zündschloß enthaltenden Schaltgetriebes;
- Fig.2: die in Fig.1 dargestellte Seitenansicht, bei der zwecks Erläuterung der Wirkungsweise der Sperrhebel und die Kulissenführung des Wählhebels in der Bildebene dargestellt sind und
- Fig.3: einen Schnitt entlang der in Fig.1 mit III-III bezeichneten Linie.

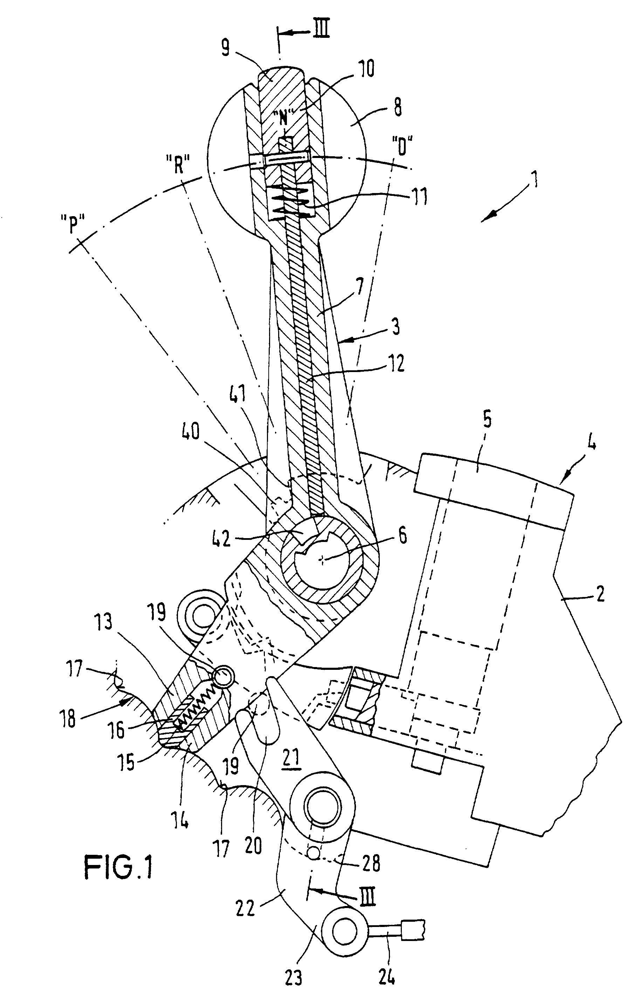

In Fig.1 ist mit 1 ein Schaltgetriebe bezeichnet, welches u.a. ein Wählhebelgehäuse 2, einen Wählhebel 3 und ein Zündschloß 4 mit Schließzylinder 5 umfaßt. Der Wählhebel 3 ist um eine Drehachse 6 verschwenkbar und als Umlenkhebel ausgebildet. Zur besseren Handhabung des Wählhebels 3 ist an dem oberen (erste) Teilhebel 7 ein Wählhebelknopf 8 angeordnet. Der Teilhebel 7 enthält außerdem eine in Richtung ihrer Längsachse 9 mittels eines Auslöseknopfes 10 gegen den Druck einer Feder 11 verschiebbare Sperrstange 12.

Der untere (zweite) Teilhebel 13 des Umlenkhebels 3 weist an seinem der Drehachse 6 abgewandten Ende 14 einen von einer Feder 15 beaufschlagten Steuernocken 16 auf, welcher in Vertiefungen 17 einer an dem Wählhebelgehäuse 2 angeordneten Kulissenführung 18 eingreift, die die einzelnen Wählhebelstellungen ("P", "R", "N", "D") definieren.

Ferner ist an dem zweiten Teilhebel 13 ein Mitnehmer 19 angeordnet, der bei Betätigung des Wählhebels 3 in die Verriegelungsstellung (üblicherweise die mit "P" bezeichnete Parkstellung) in eine Ausnehmung 20 des ersten Endes 21 eines Umlenkhebels 22 eingreift. Das zweite Ende 23 dieses Umlenkhebels 22 ist mit einem Bowdenzug 24 verbunden, welcher eine aus Übersichtlichkeitsgründen nicht dargestellte Wegfahrsperre betätigt, die direkt in das Motorgetriebe eines entsprechenden Fahrzeuges eingreift.

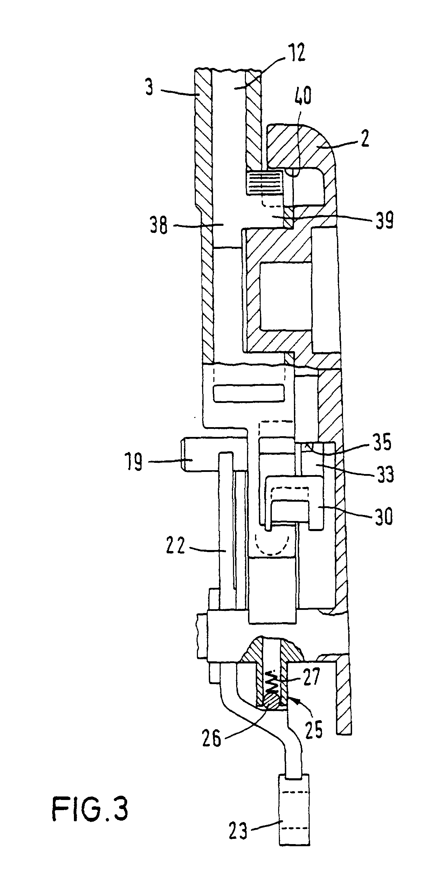

Um zu verhindern, daß durch die Kraft des Bowdenzuges 24 die Ausgangslage bzw. die Endlage des Umlenkhebels 22 verändert wird, ist ein Rastelement 25 vorgesehen (Fig.3), welches aus einer Kugel 26 besteht, die mittels einer Feder 27 in entsprechende Vertiefungen 28 (Fig.1) des Umlenkhebels 22 gedrückt wird.

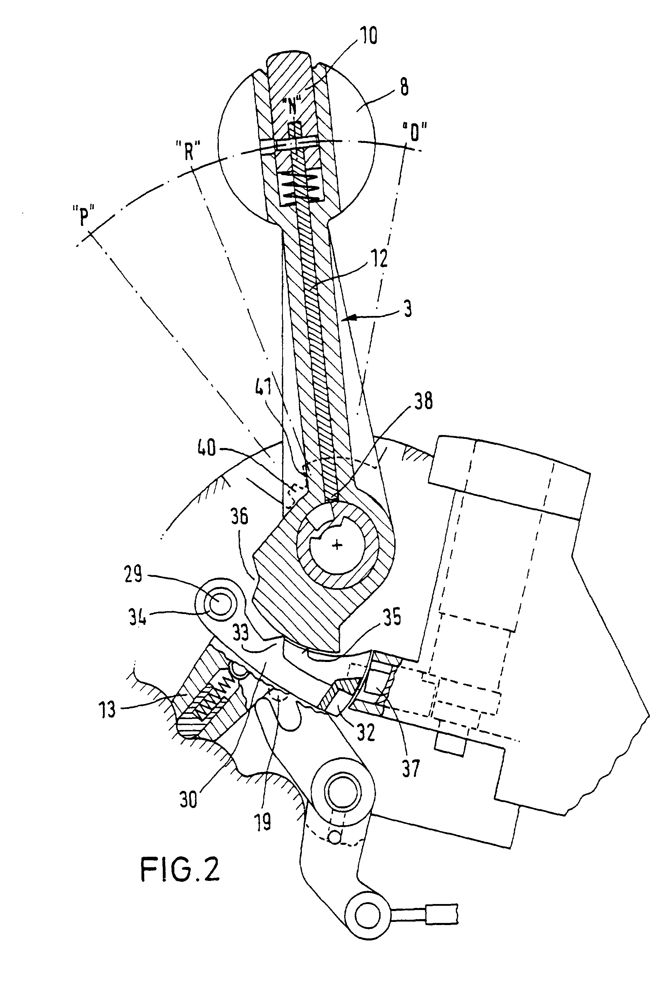

An dem Wählhebelgehäuse 2 ist ein um eine Achse 29 schwenkbarer Sperrhebel 30 angeordnet (Fig.2), dessen der Achse 29 abgewandtes Ende 31 eine nutenförmige Ausnehmung 32 enthält. An dem Sperrhebel 30 ist ein Mitnehmer 33 angeformt, der durch eine Drehfeder 34 gegen eine an dem zweiten Teilhebel 13 des Wählhebels 3 angeordnete zweite Kulissenführung 35 gedrückt wird.

Die Kulissenführung 35 ist derart ausgebildet, daß in Parkstellung "P" des Wählhebels 3 der Mitnehmer 33 durch die Drehfeder 34 in eine Ausnehmung 36 der Kulissenführung 35 gedrückt wird. Gleichzeitig fluchtet in dieser Stellung die nutenförmige Ausnehmung 32 des Sperrhebels 30 mit einem durch Drehung des Schließzylinders 5 verschiebbaren Sperrbolzen 37.

Der Wählhebel 3 ist in der Parkstellung "P" mittels der in Richtung seiner Längsachse 9 verschiebbaren Sperrstange 12 arretierbar. Hierzu ist an der dem Wählhebelknopf 8 abgewandten Seite 38 der Sperrstange 12 seitlich ein Steuernocken 39 (Fig.3) angeordnet, der in der Verriegelungsstellung des Wählhebels 3 durch die Feder 11 in eine entsprechende Rastöffnung 40 (Fig.1) des Wählhebelgehäuses 2 gedrückt wird. Zum Verschwenken des Wählhebels 3 nach Betätigung eines entsprechenden Zündschlüssels muß die Sperrstange 12 daher zunächst gegen den Druck der Feder 11 nach unten gedrückt und anschließend bis in die Rückfahrtstellung "R" über einen zapfenförmigen Anschlag 41 verschwenkt werden. Anschließend kann der Auslöseknopf 10 dann wieder losgelassen werden.

Im folgenden wird auf die Wirkungsweise der erfindungsgemäßen Vorrichtung eingegangen. Der Wählhebel 3 möge sich zunächst in der Parkstellung "P" befinden und der Sperrbolzen 37 in die nutenförmige Ausnehmung 32 des Sperrhebels 30 eingerastet sein (Fig.2), so daß ein Verschwenken des Wählhebels 3 nicht möglich ist und die Wegfahrsperre des entsprechenden Fahrzeuges eingerastet bleibt.

Wird ein in das Zündschloß 4 passender Zündschlüssel eingeführt und in Zündstellung gedreht, wird der Sperrbolzen 37 aus der nutenförmigen Ausnehmung 32 des Sperrhebels 30 herausgezogen. Durch Drücken des Auslöseknopfes 10 wird die Sperrstange 12 nach unten in eine Ausnehmung 42 (Fig.1) gedrückt. Gleichzeitig wird der seitlich angeformte Steuernocken 39 (Fig.3), der den Wählhebel 3 in der Stellung "P" arretiert hält, aus der Rastöffnung 40 des Wählhebelgehäuses 2 herausgedrückt, der Wählhebel 3 in die Stellung "R" geschwenkt und der Auslöseknopf 10 wieder losgelassen. Der Wählhebel 3 kann nun in die gewünschte Fahrtstellung verschwenkt werden, wobei der Mitnehmer 33 den Sperrhebel 30 durch die Kulissenführung 35 nach unten verschwenkt. Die nutenförmige Ausnehmung 32 und der Sperrbolzen 37 fluchten nicht mehr miteinander, so daß der Wählhebel 3 durch den Sperrbolzen 37 nicht verriegelbar ist.

Soll umgekehrt das Fahrzeug gegen Diebstahl gesichert werden, wird zunächst der Wählhebel 3 so lange verschwenkt, bis die Sperrstange 12 gegen den Anschlag 41 (Fig.1) stößt. Durch Drücken des Auslöseknopfes 10, Weiterverschwenken des Wählhebels 3 in die Parkstellung und Loslassen des Knopfes 10 erfolgt die Arretierung des Wählhebels 3. Anschließend kann der Zündschlüssel in seine Ausgangsstellung gedreht und abgezogen werden. Dabei verschiebt sich der Sperrbolzen 37 in die nutenförmige Ausnehmung 32 des Sperrhebels 30, da bei dem Zurückschwenken des Wählhebels 3 auch der Sperrhebel 30 in seine Ausgangslage zurückgeschwenkt wird. Der Wählhebel 3 ist verriegelt.

### Bezugszeichenliste

- 1: Schaltgetriebe
- 2: Wählhebelgehäuse
- 3: Wählhebel, Umlenkhebel
- 4: Zündschloß
- 5: Schließzylinder
- 6: Drehachse
- 7: erste Teilhebel
- 8: Wählhebelknopf
- 9: Längsachse
- 10: knopfförmiges Betätigungselement, Auslöseknopf
- 11: Feder
- 12: Sperrstange
- 13: zweite Teilhebel
- 14: Ende
- 15: Feder
- 16: Steuernocken
- 17: Vertiefungen
- 18: Kulissenführung
- 19: Mitnehmer
- 20: Ausnehmung
- 21: erste Ende
- 22: Umlenkhebel
- 23: zweite Ende
- 24: Bowdenzug
- 25: Rastelement
- 26: Kugel
- 27: Feder
- 28: Vertiefung
- 29: Achse
- 30: Sperrhebel
- 31: Ende
- 32: nutenförmige Ausnehmung
- 33: zweiter Mitnehmer
- 34: Drehfeder
- 35: Kulissenführung
- 36: Ausnehmung (2. Kulissenführung)
- 37: Sperrbolzen
- 38: Seite (Sperrstange)
- 39: Steuernocken
- 40: Rastöffnung
- 41: Anschlag
- 42: Ausnehmung

## Patentansprüche

1. Vorrichtung mit einem um eine Drehachse (6) schwenkbaren und an einem Wählhebelgehäuse (2) angeordneten Wählhebel (3) für Kraftfahrzeug-Automatikgetriebe, wobei zur Verriegelung des Wählhebels (3) ein mit einem Schließzylinder (5) verbundener Sperrbolzen (37) vorgesehen ist, **dadurch gekennzeichnet, daß** :
an dem Wählhebelgehäuse (2) ein federbelasteter schwenkbarer Sperrhebel (30) angeordnet ist; daß
der Sperrhebel (30) an seinem verschwenkbaren Ende (31) eine nutenförmige Ausnehmung (32) aufweist, in die der Sperrbolzen (37) in der Verriegelungsstellung des Wählhebels (3) eingreifbar ist; daß
der Wählhebel (3) als Umlenkhebel ausgebildet ist, wobei der unterhalb der Drehachse (6) befindliche zweite Teilhebel (13) eine Kulissenführung (35) aufweist, an der sich ein an dem Sperrhebel (30) befestigter Mitnehmer (33) abstützt; daß
die Kulissenführung (35) derart ausgebildet ist, daß in der Verriegelungsstellung des Wählhebels (3) der Mitnehmer (33) durch seine Feder (34) in eine Ausnehmung (36) der Kulissenführung (35) gedrückt wird, und daß in dieser Stellung die nutenförmige Ausnehmung (32) des Sperrhebels (30) mit dem Sperrbolzen (37) fluchtet, so daß bei entsprechender Betätigung des Schließzylinders (5) der Sperrbolzen (37) in die nutenförmige Ausnehmung (32) drückbar ist.

2. Vorrichtung nach Anspruch 1, **dadurch gekennzeichnet, daß** an dem der Drehachse (6) des zweiten Teilhebels (13) abgewandten Ende (14) ein federbeaufschlagter Steuernocken (16) angeordnet ist, welcher in Vertiefungen (17) einer an dem Wählhebelgehäuse (2) angeordneten Kulissenführung (18) eingreift, die die einzelnen Stellungen des Wählhebels (3) definieren.

3. Vorrichtung nach Anspruch 1 oder 2, **dadurch gekennzeichnet, daß** an dem zweiten Teilhebel (13) ein Mitnehmer (19) angeordnet ist, der bei Betätigung des Wählhebels (3) in die Verriegelungsstellung in eine Ausnehmung (20) des ersten Endes (21) eines Umlenkhebels (22) eingreift, dessen zweites Ende (23) mit einem Bowdenzug (24) oder einem Gestänge verbunden ist, derart, daß bei der Betätigung des Wählhebels (3) eine Wegfahrsperre in das Motorgetriebe eines entsprechenden Fahrzeuges eingreift.

4. Vorrichtung nach Anspruch 3, **dadurch gekennzeichnet, daß** zur Definierung der Ausgangs- und Endlage des Umlenkhebels (22) ein Rastelement (25) vorgesehen ist, welches aus einer federbeaufschlagten Kugel (26) besteht, die in entsprechende Vertiefungen (28) des Umlenkhebels (22) drückbar ist.

5. Vorrichtung nach einem der Ansprüche 1 bis 4, **dadurch gekennzeichnet, daß** der Wählhebel (3) in seiner Verriegelungsstellung mittels einer in Richtung seiner Längsachse (9) verschiebbaren Sperrstange (12) arretierbar ist, daß hierzu an der dem Wählhebelknopf (8) abgewandten Seite (38) der Sperrstange (12) seitlich ein Steuernocken (39) angeordnet ist, der in der Verriegelungsstellung des Wählhebels (3) in eine entsprechende Rastöffnung (40) des Wählhebelgehäuses (2) eingreift, und daß zur Lösung der Arretierung des Wählhebels (3) die Sperrstange (12) gegen den Druck einer Feder (11) nach unten gedrückt werden muß.

## Claims

1. A device with a gear selector lever (3) for automatic transmissions in motor vehicles which can swivel around an axis of rotation (6) and is disposed on a gear selector lever housing (2), wherein a locking pin (37) connected to a closing cylinder (5) is provided to lock the gear selector lever (3),
**characterised in that**
a spring-loaded swivelling catch lever (30) is disposed on the gear selector lever housing (2);
**in that** the catch lever (30) comprises a groove-shaped recess (32) on its swivelling end (31), into which the locking pin (37) can engage in the locking position of the gear selector lever (3);
**in that** the gear selector lever (3) is constructed as a reversing lever, the second lever part (13) situated beneath the axis of rotation (6) comprising a shifting gate guide (35) on which a catch (33) fixed to the catch lever (30) is supported;
**in that** the shifting gate guide (35) is constructed in such a manner that in the locking position of the gear selector lever (3) the catch (33) is pressed by its spring (34) into a recess (36) of the shifting gate guide (35), and in such a manner that in this position the groove-shaped recess (32) of the catch lever (30) aligns with the locking pin (37) so that upon the corresponding actuation of the closing cylinder (5) the locking pin (37) can be pressed into the groove-shape recess (32).

2. A device according to Claim 1,
**characterised in that** disposed at the end (14) facing away from the axis of rotation (6) of the second lever part (13) is a spring-loaded peripheral cam (16), which engages in depressions (17) of a shifting gate guide (18) disposed on the gear selector lever housing (2), which define the individual positions of the gear selector lever (3).

3. A device according to Claim 1 or 2,
**characterised in that** disposed on the second lever part (13) is a catch (19), which, upon the actuation of the gear selector lever (3), engages in the locking position in a recess (20) of the first end (21) of a reversing lever (22), the second end (23) of which is connected to a Bowden cable (24) or a rod assembly in such a manner that upon the actuation of the gear selector lever (3) an immobiliser engages in the engine gearbox of a corresponding vehicle.

4. A device according to Claim 3,
**characterised in that** to define the initial and final position of the reversing lever (22) a locking element (25) is provided, which consists of a spring-loaded ball (26) which can be pressed into corresponding depressions (28) of the reversing lever (22).

5. A device according to one of Claims 1 to 4,
**characterised in that** the gear selector lever (3) can be stopped in its locking position by means of a locking rod (12) which can move in the direction of its longitudinal axis (9),
**in that** for this on the side (38) of the locking rod (12) facing away from the gear selector lever knob (8) a peripheral cam (38) is laterally disposed, which in the locking position of the gear selector lever (3) engages in a corresponding snap-in aperture (40) of the gear selector lever housing (2),
**and in that** the locking rod (12) has to be pressed downwardly against the pressure of a spring (11) for the release of the locking of the gear selector lever (3).

## Revendications

1. Dispositif avec un levier de sélection (3) pivotant autour d'un axe de rotation (6) et disposé sur le boîtier (2) d'un levier de sélection d'une transmission automatique de véhicule à moteur, dans lequel un goujon de blocage (37) relié à un cylindre de serrure (5) est prévu pour verrouiller le levier de sélection (3),
**caractérisé en ce que** sur le boîtier (2) du levier de sélection est disposé un levier de blocage (30) rotatif sollicité par un ressort, **en ce que** le levier de blocage (30) présente à son extrémité pivotante (31) un évidement (32) en forme de rainure dans lequel le goujon de blocage (37) peut s'engager lorsque le levier de sélection (3) est dans la position de verrouillage, **en ce que** le levier de sélection (3) est configuré comme levier de renvoi, la deuxième partie (13) du levier située en dessous de l'axe de rotation (6) présentant une coulisse de guidage (35) sur laquelle s'appuie l'entraîneur (33) fixé sur le levier de blocage (30), **en ce que** la coulisse de guidage (35) est configurée de telle sorte que lorsque le levier de sélection (3) est dans la position de verrouillage, l'entraîneur (33) est repoussé par un ressort (34) dans un évidement (36) de la coulisse de guidage (35) et **en ce que** dans cette position, l'évidement (32) en forme de rainure du levier de blocage (30) est aligné sur le goujon de blocage (37) de telle sorte qu'un actionnement approprié du cylindre de serrure (5) permet de repousser le goujon de blocage (37) dans l'évidement (32) en forme de rainure.

2. Dispositif selon la revendication 1, **caractérisé en ce qu'**à l'extrémité (14) non tournée vers l'axe de rotation (6) de la deuxième partie (13) du levier est disposée une came de commande (16) sollicitée par un ressort, qui s'engage dans des creux (17) d'une coulisse de guidage (18) disposée sur le boîtier (2) du levier de sélection, lesquels creux définissent les positions individuelles du levier de sélection (3).

3. Dispositif selon la revendication 1 ou 2, **caractérisé en ce que** sur la deuxième partie (13) du levier est disposé un entraîneur (19) qui, lors de l'actionnement du levier de sélection (3) dans la position de verrouillage, s'engage dans un évidement (20) de la première extrémité (21) d'un levier de renvoi (22) dont la deuxième extrémité (23) est reliée à un câble Bowden (24) ou à une tringle, de telle sorte que lorsque le levier de sélection (3) est actionné, un antivol s'engage dans la transmission du moteur du véhicule concerné.

4. Dispositif selon la revendication 3, **caractérisé en ce que** pour définir la position de départ et la position finale du levier de renvoi (22) est prévu un élément d'encliquetage (25) qui est constitué d'une bille (26) sollicitée par un ressort et qui peut être enfoncée dans les creux (28) correspondants du levier de renvoi (22).

5. Dispositif selon l'une des revendications 1 à 4, **caractérisé en ce que** le levier de sélection (3) peut être bloqué dans sa position de verrouillage au moyen d'une tringle de blocage (12) qui peut coulisser dans la direction de son axe longitudinal (9), **en ce qu'**à cet effet, une came de commande (39) est disposée latéralement sur le côté (38) de la tringle de blocage (12) non tourné vers le bouton (8) du levier de sélection et s'engage dans une ouverture d'encliquetage (40) correspondante du boîtier (2) du levier de sélection lorsque le levier (3) se trouve dans la position de verrouillage, et **en ce que** pour libérer le blocage du levier de sélection (3), la tringle de blocage (12) doit être repoussée vers le bas en opposition à la poussée d'un ressort (11).
